# NEUE EUROPÄISCHE PATENTSCHRIFT

(11) **EP 0 522 493 B2**
(45) Veröffentlichungstag und Bekanntmachung des Hinweises auf die Entscheidung über den Einspruch: **24.10.2001**
(45) Hinweis auf die Patenterteilung: 29.11.1995
(21) Anmeldenummer: 92111475.7
(22) Anmeldetag: 07.07.1992
(51) Int. Cl.: F16L 37/56

(54) **Schnellkupplung zum jeweils gleichzeitigen Herstellen oder Lösen der Verbindungen mehrerer Kupplungen und/oder Anschlussstecker, insbesondere Kupplungsblock für Anbaufrontlader an Fahrzeugen**
Quick acting coupling for the simultaneous make-up and release of the connection for several couplings and/or plugs, in particular coupling-manifold for tool front connector on vehicles
Raccord rapide pour la connection et déconnection simultanée de plusieurs connections d'accouplements et/ou prises, en particulier bloc de connection pour ensemble d'outils sur des véhicules

(30) Priorität: 09.07.1991 DE 4122613
(43) Veröffentlichungstag der Anmeldung: 13.01.1993
(73) Patentinhaber: FASTER S.r.l., 26027 Rivolta d'Adda (CR) (IT)
(72) Erfinder: Arosio, Massimo, I-20066 Melzo/MI (IT)
(74) Vertreter: Schwarz, Klaus-Jürgen, Dipl.-Ing.

(56) Entgegenhaltungen:
- EP-B- 0 082 922
- DE-A- 2 011 361
- DE-A- 3 918 250
- DE-B- 1 256 006
- DE-U- 7 421 926
- FR-A- 2 645 242

## Beschreibung

Die Erfindung betrifft eine Schnellkupplung zum jeweils gleichzeitigen Herstellen oder Lösen der Verbindungen mehrerer Kupplungen und/oder Anschlußstecker mit ineinandergreifenden Muffen- und Steckerteilen von Hydraulik-, Pneumatik- und/oder elektrischen Energieübertragungseinrichtungen als Kupplungsblock für hydraulisch betriebene Anbaugeräte an Fahrzeugen, wobei die Muffenteile und die Steckerteile an zwei Tragplatten sitzen, die durch miteinander verbundene Spannhebel, die die Tragplatten an deren Rändern von außen her übergreifen, gegeneinander bewegbar und in der Kupplungsstellung aneinander festlegbar sind, wobei die Steckerteile an der einen Tragplatte starr befestigt sind und von dieser hervorstehen und die andere Tragplatte mit den Muffenteilen an einem Fahrzeug fest montierbar ist, und wobei die Spannhebel um koaxiale Drehlagerzapfen an einer der beiden Tragplatten schwenkbar sind und kurvenförmige Eingriffsschlitze aufweisen, mit denen sie von gegenüberliegenden Rändern an der anderen Tragplatte koaxial zueinander und parallel zu den Drehlagerzapfen hervorstehende Spannzapfen übergreifen.

Die Schnellkupplung ist zum gleichzeitigen Anschluß mehrerer Schnellverschlußkupplungen, wie sie insbesondere für den Anschluß von Frontladern oder ähnlichen hydraulisch betriebenen Anbaugeräten an Fahrzeugen verwendet werden, bestimmt, um durch den gleichzeitigen Anschluß der Druckmittelleitungen und elektrischen Anschlußverbindungen die Kupplungszeit zu verringern und die Möglichkeit eines Vertauschens oder Verwechselns der jeweiligen Verbindung der verschiedenen Schnellverschlußkupplungen und Steckerteile zu vermeiden.

Bei einer derartigen aus der DE-A-1 256 006 bekannten Schnellkupplung für mit Ventilen ausgerüstete Kupplungsteile weist jeder der beiden Spannhebel eine Kurvenbahn auf, die in eine Raste ausläuft, in die von der gegenüberliegenden Tragplatte hervorstehende Spannzapfen einrastbar sind. Außerdem ragen von der unteren Tragplatte neben den daran fest montierten Muffenteilen der Ventilkupplungen zusätzliche parallele Führungsstifte auf, die mit geringem Spiel in entsprechende Ausnehmungen an der anderen Tragplatte mit den daran ebenfalls fest montierten Steckerteilen eingreifen. Hierbei stehen jedoch die Muffenteile von der unteren Tragplatte weit nach oben hervor, so daß die gesamte Kupplung sperrig ist und bei jedem Kupplungs- und Entkupplungsvorgang durch austretende Hydraulikflüssigkeit stark verschmutzt wird und nur äußerst umständlich wieder gereinigt werden kann.

Aus FR-A-26 45 242 ist eine weitere Mehrfachkupplung für Hydraulikanschlüsse und elektrische Steckverbindungen insbesondere bei Ackerschleppern bekannt, bei der die Hydraulikkupplungen als federbelastete Schnellverschlußkupplungen mit Sperrkugelverriegelung ausgebildet sind. Eine untere, wannenförmige Platte mit den davon aufragenden Steckerteilen der Schnellverschlußkupplungen ist am Schlepper fest montiert, während die Muffenteile der Kupplungsverbindungen an einem die untere wannenförmige Platte von oben her dekkelförmig übergreifenden Gehäuse montiert sind mit daran um eine gemeinsame Achse drehbaren Spannhebeln, die mit kurvenförmigen Eingriffsschlitzen von der unteren Platte seitlich hervorstehende, mit Rollen bestückte Spannzapfen übergreifen.

Das obere kastenförmige Gehäuse ist mit einer oberen festen Platte ausgebildet, von der die Muffenteile der Schnellverschlußkupplungen nach unten ragen und eine zweite, gegenüber der oberen festen Platte bewegliche Platte durchsetzen, die mit den Gleithülsen der Muffenteile für die Sperrkugelverriegelung verbunden ist. Diese zweite bewegliche Zwischenplatte ist an dem kastenförmigen Gehäuse in senkrechten seitlichen Schlitzen auf- und abbewegbar geführt und wird über Kurvenbahnen an den seitlichen Spannhebeln bei jedem Kupplungs- und Entkupplungsvorgang gegenüber der oberen festen Platte so bewegt, daß die Sperrkugelverriegelungen der Muffenteile in entsprechende Umfangsnuten an den Steckerteilen einrasten bzw. von diesen gelöst werden.

Auch diese bekannte Mehrfachkupplung hat den Nachteil, daß bei jedem Kupplungs- und Entkupplungsvorgang an den Schnellverschlußkupplungen Hydraulikflüssigkeit austritt, die sich in dem fest montierten wannenförmigen Unterteil ansammelt. Die Mehrfachkupplung kann daher auch nicht in einer von der waagerechten Stellung der unteren wannenförmigen Platte abweichenden Stellung am Fahrzeug montiert werden. Außerdem ist der Aufbau der Kupplung durch die zusätzliche bewegliche Platte für die Betätigung der Sperrkugelverriegelungen äußerst kompliziert, und die Muffenteile der Schnellverschlußkupplungen können an dem deckelförmigen Oberteil auch nicht ausreichend starr montiert werden, um eine stets sichere und verschleißarme Kupplungsverbindung zu gewährleisten. So können flexible Anschlußrohre oder Schläuche, wenn sie unter Druck stehen, einen Versatz oder eine Verkantung zwischen den Stekkerteilen und den Muffenteilen der Kupplungsverbindungen hervorrufen und dadurch die Funktion der Kupplungen beeinträchtigen. Außerdem muß eine genaue gegenseitige Positionierung der beiden beweglichen Platten der Mehrfachkupplung durch das Hebelsystem sichergestellt werden.

Aus der DE 32 28 434 C2 ist zwar weiterhin eine Kupplungsvorrichtung für die Energiezufuhr zu auswechselbaren Arbeitseinheiten einer Spritzgießmaschine bekannt, die mit sogenannten Schnellverschlußkupplungen mit Sperrkugelverriegelung ausgerüstet ist, deren Kupplungsteile durch eine Stekkerhülse und einen axial in diese einführbaren Steckerstift gebildet sind, wobei die Verriegelungsmittel durch in eine Umfangsnut des Steckerstiftes eingreifende Sperrkugeln gebildet sind, die durch eine entgegen Federwirkung axial bewegbare Sicherungshülse in Eingriffslage gehalten sind. Diese Sicherungshülse muß bei jedem Kupplungs- und Entkupplungsvorgang gesondert betätigt werden. Außerdem sind bei dieser bekannten Kupplungsvorrichtung zum Herstellen der Kupplungsverbindung keine von Hand zu betätigenden Schwenkhebel vorhanden, vielmehr erfolgt das Einrücken der Kupplungen für alle Kupplungen gleichzeitig durch eine aufwendige Kolben- und Zylinderanordnung, die z.B. vom Bedienerpult her hydraulisch automatisch gesteuert wird, so daß der Kupplungsvorgang ohne jeden zusätzlichen Handeingriff des Personals vollautomatisch durchgeführt werden kann.

Aus DE 39 18 250 A1 ist ferner eine selbstdichtende Anschlußkupplung in Form einer Flachdichtkupplung bekannt, die auch als Vielfachkupplung mit mehreren selbstdichtenden Anschlußkupplungen ausgebildet sein kann. Diese Flachdichtkupplung ist mit je einem Ventilsitz und je einem Ventilkörper ausgestattet, deren Schließlage federbelastet ist, wobei die Ventilsitze von Steckerteil und Muffenteil bei jedem die Flüssigkeitsleitung herstellenden Kupplungsvorgang stirnseitig flach aneinanderliegen und die Ventikhörper einander wechselseitig zwangsläufig in die Ventilöffnungsstellung hineinbewegen.

Dadurch, daß bei dieser Flachdichtkupplung eine ventilkörperseitige stirnseitige Kreisfläche und eine ventilsitzseitige stirnseitige Kreisringfläche sowohl des Steckerteils als auch des Muffenteils praktisch zwei durchgehende Gesamtkreisflächen ergeben, die in ihrer Schließlage vor Einleitung des Ventil-Öffnungshubes praktisch spielfrei unmittelbar aneinanderliegen, ist jeglicher Ringraum, in den Leckflüssigkeit übertreten könnte, vermieden.

Bei einer Ausbildung als Vielfachkupplung nach DE 39 18 250 A1 sind jedoch entweder alle Stekkerteile und/oder alle Muffenteile jeweils in einer anschlußgehäuseseitigen Montageplatte mit einem verhältnismäßig großen seitlichen Spiel quer zur Längsmittelachse der jeweiligen Anschlußkupplung begrenzt verschieblich gehalten. Durch dieses seitliche Spiel ergeben sich Schwierigkeiten beim Kupplungsvorgang, wenn die betreffenden Steckeroder Muffenteile mit flexiblen Anschlußrohren oder Schläuchen verbunden sind, wie schon oben zu FR 26 45 242 dargelegt worden ist.

Aus dem Prospektblatt F9.430 der Firma Rörnheld, Ausgabe 2-90 mit dem Titel "Einschraub-Kuppelelemten" sind zwar ebenso wie aus dem Prospekt "Automatisches Kupplungssystem" der Firma Römheld, Ausgabe 7.88 Einschraubkupplungen bekanntgeworden, bei denen die Kupplungsmechaniken im entkuppelten Zustand stirnseitig glatt sind. Die Kuppelelemente dieser Kupplungsmechaniken haben stirnseitige Dichtflächen, die vor dem Ankuppeln gesäubert werden müssen, damit die Dichtigkeit im Kuppelzustand gewährleistet ist. Solche Einschraub-Kuppel-Elemente sind sehr schrnutzanfällig und daher schon aus diesem Grunde nur für einen Einsatz bei Werkzeugmaschinen geeignet, nicht jedoch für einen rauhen Betrieb im Freien, wie dies insbesondere bei Frontladern oder ähnlichen hydraulisch betriebenen Anbaugeräten an Fahrzeugen in der Landwirtschaft und ähnlichen Einsatzgebieten der Fall ist. Aus dieser Schrift ist es auch bekannt, daß die Tragplatten in der Kuppelstellung dicht aneinanderliegen

Der Erfindung liegt die Aufgabe zugrunde, eine Schnellkupplung zum jeweils gleichzeitigen Herstellen und Lösen der Verbindungen mehrerer Kupplungen und/oder Anschlußstecker mit ineinandergreifenden Stecker- und Muffenteilen nach dem Oberbegriff des Anspruches 1 in robuster und kompakter Bauweise so auszubilden, daß die Kupplungsverbindung - auch wenn die Stecker- und Muffenteile mit flexiblen Anschlußrohren oder Schläuchen verbunden sind - mittels einfacher mechanischer Einrichtungen ohne die Gefahr gegenseitiger Verkantungen der vorhandenen Steckerund Muffenteile und ohne Verlust von Hydraulikflüssigkeit in einfacher Weise von Hand hergestellt und wieder gelöst werden kann.

Diese Aufgabe wird bei einer Schnellkupplung nach dem Oberbegriff des Anspruches 1 gemäß der Erfindung dadurch gelöst, daß die Hydraulikkupplungen federbelastete selbstdichtende Flachdichtkupplungen sind, deren Muffen- und Steckerteile ohne Sperrkugelverriegelungen ineinandergreifen, wobei das Muffenteil **einen verschiebbaren Ventilsitz und einen starren Ventilkörper** und das zugehörige Steckerteil einen starren Ventilsitz und einen verschiebbaren Ventilkörper aufweisen, **wobei die** Schließlage **der verschiebbaren Ventilteile** derart federbelastet und durch Anschläge bestimmt ist, daß bei jeder Ventilanordnung eine stirnseitige Ventilkörper-Kreisfläche und eine diese umgebende ventilsitzseitige Ringfläche übergangslos in einer gemeinsamen Verschlußebene liegen, so daß der Ventilkörper und die Ventilsitze von Muffen- und Steckerteil bei dem den Flüssigkeitsdurchtritt freigebenden Kupplungsvorgang einander wechselseitig zwangsläufig in die Ventil-Öffnungsstellung hineinbewegen und ebenso eine leckfreie Trennung ermöglichen, daß das Muffenteil jeder Flachdichtkupplung mit einem gegenüber einem Gewindeabschnitt, mit dem jedes Muffenteil in der Tragplatte verschraubt ist, radial nach außen hervorspringenden Umfangsflansch in einer entsprechenden Umfangsnut an einer Montageöffnung für das Muffenteil an der fest montierbaren Tragplatte derart versenkt befestigt ist, daß es mit seiner flachen Stirnseite in einer gemeinsamen Ebene mit der Kupplungsseite der Tragplatte abschließt und daß die Steckerteile der Flachdichtkupplungen von der beweglichen Tragplatte so weit hervorstehen, daß die beiden Tragplatten in der Kupplungsstellung der Flachdichtkupplungen dicht aneinanderliegen.

Die erfindungsgemäße Schnellkupplung hat den Vorteil, daß die als federbelastete Flachdichtkupplungen ohne Sperrkugel verriegelung ausgebildeten Hydraulikkupplungen, die ein leckfreies Kuppeln und Entkuppeln ermöglichen, durch die absolut starre Befestigung sowohl der Muffenteile als auch der Steckerteile an den zugehörigen beiden Tragplatten mittels der daran seitlich angelenkten Spannhebel ohne jede gegenseitige Verkantungen auch unter Druck im Hydrauliksystem des Schleppers ebenso wie unter einem noch im Anbaugerät vorhandenen oder durch Strahlungswärme von außen wieder aufgebauten Restdruck in einfacher Weise zusammengeführt und voneinander gelöst werden können. Dies wird insbesondere auch durch die besonders starre und paßgenaue versenkte Anordnung der Muffenteile an der fest montierten Tragplatte und weiterhin dadurch erreicht, daß die Tragplatten durch die entsprechende Anordnung der Steckerteile in der Kupplungsstellung der Flachdichtkupplungen dicht aneinanderliegen, so daß auch in der Kupplungsstellung jegliche Querbeanspruchungen von den ineinandergreifenden Kupplungsteilen der Flachdichtkupplungen ferngehalten werden. Durch die besondere Anordnung der Muffenteile an der fest montierten Tragplatte kann diese zudem auf der Kupplungsseite in besonders einfacher Weise von Staub und anderen Verschmutzungen freigehalten und gereinigt werden, was insbesondere beim Einsatz solcher Schnellkupplungen in der Landwirtschaft von Vorteil ist.

Zu der besonders robusten, kompakten Bauweise der Schnellkupplung trägt weiterhin bei, daß die Spannhebel mit ihren Drehlagerzapfen an der fest montierten Tragplatte dicht unterhalb der Kupplungsseite der Tragplatte angelenkt sind und somit beide Kupplungshälften in der Kupplungsstellung fest zusammendrücken.

Von Vorteil für die kompakte Bauweise und für eine störungsfreie und leckfreie Funktionsweise der Schnellkupplung ist ferner, daß die beiden Tragplatten kreisförmig ausgebildet sind, daß die untere fest montierte Tragplatte einen geringfügig größeren Durchmesser als die bewegliche obere Tragplatte hat und an ihrem Umfang im Bereich der an ihr angelenkten beiden Spannhebel derart seitlich abgeflacht ist, daß die Spannhebel die von der beweglichen Tragplatte seitlich hervorstehenden Spannzapfen in ihren kurvenförmigen Eingriffsschlitzen innerhalb des Kreisumfanges der festen Tragplatte aufnehmen.

Hierbei ist es weiterhin von Vorteil, wenn an beiden Tragplatten die Stecker- und Muffenteile von vorzugsweise vier Flachdichtkupplungen rings um eine Mittelöffnung für eine weitere Flachdichtkupplung oder eine elektrische oder pneumatische Steckverbindung in einem gleichen gegenseitigen Winkelabstand von jeweils 90° und jeweils paarweise beiderseits der Schwenkachse der Spannhebel und der dazu achsparallelen Spannzapfen derart verteilt angeordnet sind, daß beim Kuppeln und Entkuppeln stets alle federbelasteten Flachdichtkupplungen gleichmäßig zusammengedrückt und wieder entlastet werden.

Die Funktionsweise der Schnellkupplung beim Kuppeln und Entkuppeln kann dabei auch noch dadurch verbessert werden, daß von der Tragplatte mit den Muffenteilen der Flachdichtkupplungen mindestens zwei Führungsstifte koaxial zu den Längsachsen der Flachdichtkupplungen und beiderseits der Schwenkachse der Spannhebel mittig zwischen diesen parallel zueinander aufragen, die in dazu passende Führungsöffnungen an der Tragplatte mit den Steckerteilen der Flachdichtkupplungen mit Gleitspiel eingreifen.

Die Steckerteile der Flachdichtkupplungen greifen vorteilhafterweise mit einem nach außen hervorspringenden Umfangsflansch in eine entsprechende Umfangsnut an der Montageöffnung an der zugehörigen Tragplatte ein und sind in dieser mittels einer Schraubmuffe festgelegt, die von der Rückseite der Tragplatte auf das Anschlußende des Steckerteils aufgeschraubt ist.

Einer Verschmutzung der Schnellkupplung wird weiterhin dadurch entgegengewirkt, daß die Tragplatten mit einer randseitigen Dichtung rings um die ineinandergreifenden Muffen- und Steckerteile der Flachdichtkupplungen ausgebildet sind, wobei zweckmäßig an einer Tragplatte eine Rundschnurdichtung angeordnet ist, die bei miteinander verbundenen Tragplatten an der gegenüberliegenden Tragplatte abdichtend anliegt. Eine besonders einwandfreie Abdichtung zwischen den beiden Tragplatten wird dabei dadurch erreicht, daß die bewegliche Tragplatte mit einem hervorstehenden, von einem stufenförmig zurückspringenden Umfangsrand umgebenen flachen Mittelteil in eine entsprechende flache Mulde mit einem hervorstehenden Umfangsrand an der festen Tragplatte abdichtend eingreift.

Für die gegenseitige Festlegung der Tragplatten mit den ineinandergreifenden Flachdichtkupplungen in der Kupplungsstellung weisen die Spannhebel an den Enden der kurvenförmigen Eingriffsschlitze jeweils eine Raste auf, in der die von der beweglichen Tragplatte hervorstehenden Spannzapfen in der Kupplungsstellung durch den Druck der federbelasteten Flachdichtkupplungen gesichert sind.

Außerdem kann zur Sicherung der Schnellkupplung gegen ungewolltes Entkuppeln mindestens einem der beiden Spannhebel ein zu deren Schwenkachse paralleler federbelasteter Sperrstift zugeordnet sein, der die Spannhebel in der Kupplungsstellung der Flachdichtkupplungen an der zugehörigen Tragplatte festlegt.

Ein bevorzugtes Ausführungsbeispiel der Erfindung ist in der Zeichnung schematisch dargestellt.
Es zeigen
- Fig. 1: eine Schnellkupplung in Seitenansicht mit auseinandergezogenen Kupplungsteilen,
- Fig. 2: eine Unteransicht des Steckerteils der Schnellkupplung in Richtung der Pfeile II - II von Fig. 1,
- Fig. 3: eine Draufsicht auf das Muffenteil der Schnellkupplung in Richtung der Pfeile III - III von Fig. 1,
- Fig. 4: eine Seitenansicht der Schnellkupplung beim Einkuppeln,
- Fig. 5: eine Seitenansicht nach erfolgtem Einkuppeln,
- Fig. 6: eine vergrößerte Teildarstellung einer Raste an den beiden Spannhebeln der Schnellkupplung in der Kupplungsstellung,
- Fig. 7: eine ebenfalls vergrößerte Teildarstellung einer zusätzlichen Sperre für die Spannhebel der Schnellkupplung gemäß Schnittlinie VII - VII von Fig. 5,
- Fig. 8: einen vergrößerten Längsschnitt durch die Schnellkupplung zu Beginn eines Kupplungsvorganges in der Stellung von Fig. 4,
- Fig. 9: einen vergrößerten Längsschnitt durch die Schnellkupplung in einer Zwischenstellung während des Kupplungsvorganges und
- Fig. 10: einen vergrößerten Längsschnitt durch die Schnellkupplung nach Erreichen der Kupplungsstellung von Fig. 5.

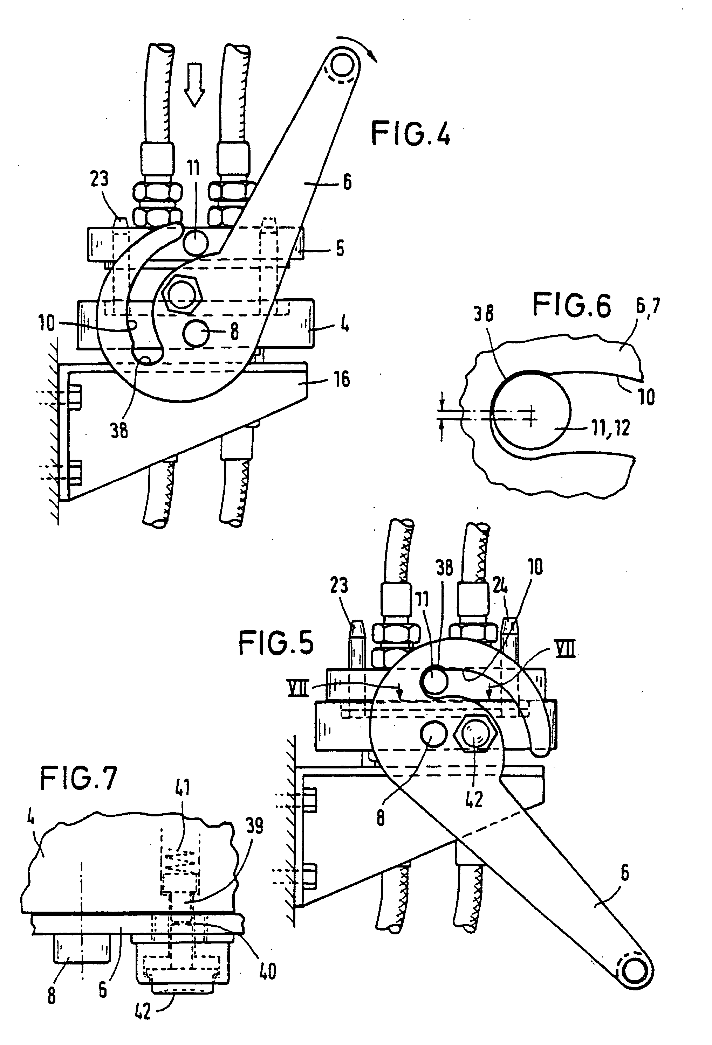

Bei der Schnellkupplung sitzen die ineinandergreifenden Muffen- und Steckerteile 2, 3 von an sich bekannten federbelasteten Flachdichtkupplungen 1 ohne Sperrkugelverriegelung an zwei Tragplatten 4, 5, die durch miteinander verbundene Spannhebel 6, 7, die die Tragplatten 4, 5 an deren Rändern von außen her übergreifen, gegeneinander bewegbar und in der Kupplungsstellung von Fig. 5 aneinander festlegbar sind. Die Spannhebel 6, 7 sind um koaxiale Drehlagerzapfen 8, 9 an einer (4) der beiden Tragplatten 4, 5 gemeinsam schwenkbar und weisen kurvenförmige Eingriffsschlitze 10 auf, mit denen sie von gegentiberliegenden Rändern an der anderen Tragplatte 5 koaxial zueinander und parallel zu den Drehlagerzapfen 8, 9 hervorstehende Spannzapfen 11, 12 übergreifen.

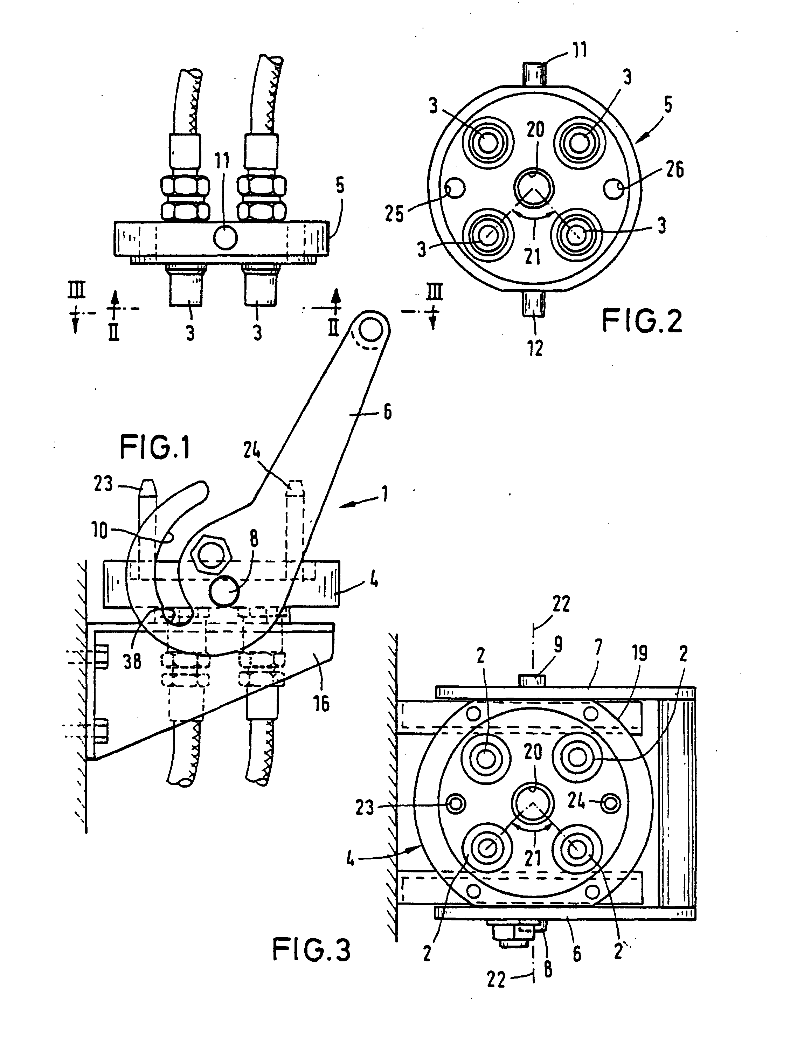

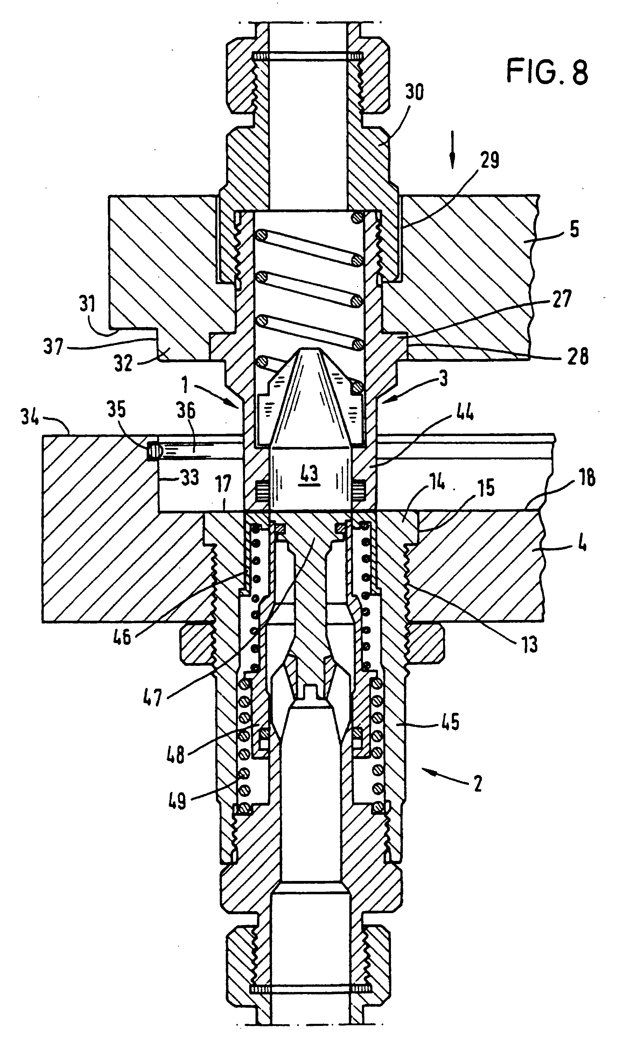

Das Muffenteil 2 jeder Flachdichtkupplung 1 hat im Anschluß an einen Gewindeabschnitt 13 (Fig. 8 bis 10), mit dem das Muffenteil 2 in der Tragplatte 4 verschraubt ist, einen radial nach außen hervorspringenden Umfangsflansch 14, mit dem es in einer entsprechenden Umfangsnut 15 an einer Montageöffnung für das Muffenteil 2 an der zugehörigen Tragplatte 4, die an einer Konsole 16 (Fig. 1, 4 und 5) an einem Fahrzeug oder dergleichen fest montiert ist, derart paßgenau versenkt befestigt ist, daß es mit seiner flachen Stirnseite 17 in einer gemeinsamen Ebene mit der Kupplungsseite 18 der Tragplatte 4 abschließt.

Die Spannhebel 6, 7 sind mit ihren Drehlagerzapfen 8, 9 an der fest montierten Tragplatte 4 dicht unterhalb der Kupplungsseite 18 der Tragplatte 4 angelenkt.

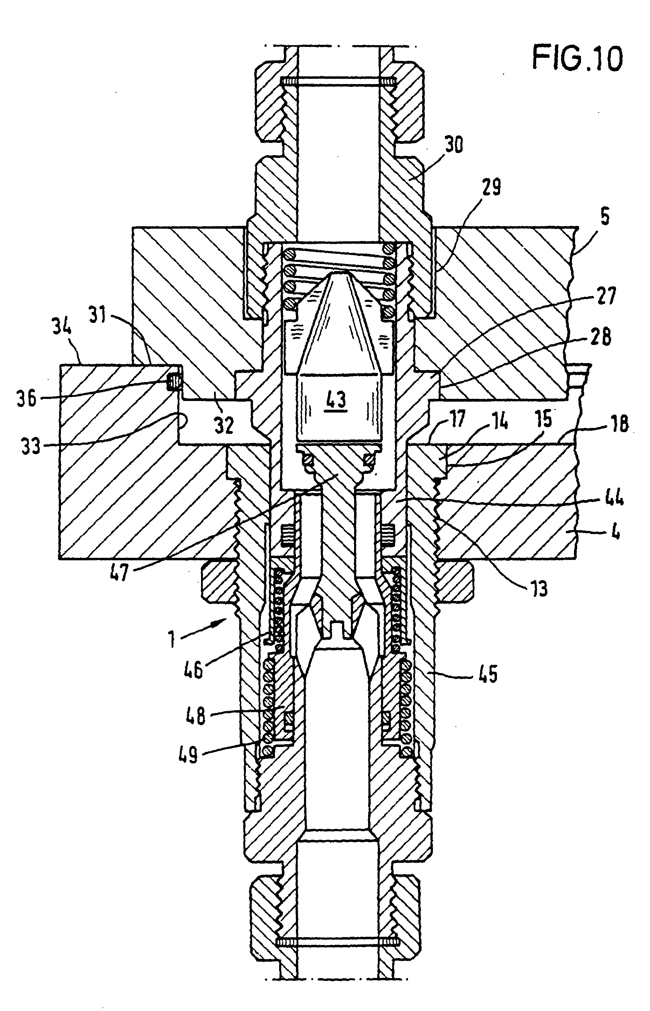

Ferner stehen die Steckerteile 3 der Flachdichtkupplungen von der beweglichen Tragplatte 5 so weit hervor, daß die beiden Tragplatten 4, 5 in der Kupplungsstellung der Flachdichtkupplungen von Fig. 5 und 10 dicht aneinanderliegen.

Beide Tragplatten 4, 5 (Fig. 2 und 3) sind kreisförmig ausgebildet, wobei die untere, am Fahrzeug fest montierte Tragplatte 4 einen geringfügig größeren Durchmesser als die bewegliche obere Tragplatte 5 hat und im Bereich der an ihr angelenkten beiden Spannhebel 6, 7 an ihrem Kreisumfang 19 derart seitlich abgeflacht ist (Fig. 3), daß die Spannhebel 6, 7 die von der beweglichen Tragplatte 5 seitlich hervorstehenden beiden Spannzapfen 11, 12 in ihren kurvenförmigen Eingriffsschlitzen 10 noch innerhalb des Kreisumfanges 19 der festen Tragplatte 4 sicher aufnehmen.

An beiden Tragplatten 4, 5 sind die Muffen- und Steckerteile 2, 3 von vier Flachdichtkupplungen 1 rings um eine Mittelöffnung 20, die für die Montage einer weiteren Flachdichtkupplung oder einer elektrischen oder pneumatischen Steckverbindung dienen kann, in einem gleichen gegenseitigen Winkelabstand 21 von jeweils 90° und jeweils paarweise beiderseits der Schwenkachse 22 der Spannhebel 6, 7 und der dazu achsparallelen Spannzapfen 11, 12 derart verteilt angeordnet, daß beim Kuppeln und Entkuppeln stets alle federbelasteten Flachdichtkupplungen gleichmäßig zusammengedrückt und wieder entlastet werden.

Von der Tragplatte 4 mit den Muffenteilen 2 der Flachdichtkupplungen 1 ragen außerdem zwei parallele Führungsstifte 23, 24 koaxial zu den Längsachsen der Flachdichtkupplungen auf, die beiderseits der Schwenkachse 22 der Spannhebel 6, 7 und mittig zwischen diesen angeordnet sind und in dazu passende Führungsöffnungen 25, 26 an der anderen Tragplatte 5 mit den Steckerteilen 3 der Flachdichtkupplungen mit Gleitspiel eingreifen.

Die Steckerteile 3 der Flachdichtkupplungen 1 haben ebenfalls einen nach außen hervorspringenden Umfangsflansch 27, mit dem sie in eine entsprechende Umfangsnut 28 an der Montageöffnung 29 an der zugehörigen Tragplatte 5 paßgenau eingreifen und in dieser mittels einer Schraubmuffe 30 festgelegt sind, die von der Rückseite der Tragplatte 5 auf das Anschlußende des Steckerteils 3 aufgeschraubt ist.

Für eine gegenseitige Abdichtung der beiden Tragplatten 4, 5 in der Kupplungsstellung von Fig. 5 und 10 ist die bewegliche obere Tragplatte 5 mit einem hervorstehenden, von einem stufenförmig zurückspringenden Umfangrand 31 umgebenen flachen Mittelteil 32 ausgebildet, der in eine entsprechende flache Mulde 33 mit einem hervorstehenden Umfangsrand 34 an der festen Tragplatte 4 abdichtend eingreift. Die fest montierte untere Tragplatte 4 weist hierfür eine in eine umlaufende Umfangsnut 35 eingelegte Rundschnurdichtung 36 auf, die in der Kupplungsstellung von Fig. 5 und 10 am Außenumfang 37 des flachen Mittelteils 32 der oberen Tragplatte 5 dichtend anliegt.

Zur gegenseitigen Festlegung der Tragplatten 4, 5 mit den ineinandergreifenden Flachdichtkupplungen 1 in der Kupplungsstellung von Fig. 5 und 10 weisen die Spannhebel 6, 7 an den Enden der kurvenförmigen Eingriffsschlitze 10 jeweils eine Raste 38 auf, die, wie in der Teildarstellung von Fig. 6 gezeigt ist, so bemessen ist, daß die von der beweglichen Tragplatte 5 seitlich hervorstehenden Spannzapfen 11, 12 bei Erreichen der Raststellung von Fig. 5 und 6 unter dem Druck der federbelasteten Flachdichtkupplungen in die Rastvertiefungen einrasten und somit in der Kupplungsstellung gesichert sind.

Zusätzlich ist einem der beiden Spannhebel 6, 7 ein zu der gemeinsamen Schwenkachse 22 paralleler federbelasteter Sperrstift 39 (Fig. 7) zugeordnet, der die Spannhebel 6, 7 in der Kupplungsstellung der Flachdichtkupplungen von Fig. 5, 7 und 10 an der zugehörigen Tragplatte 4 festlegt.

Der Sperrstift 39 ist an der fest montierten Tragplatte 4 mit den Muffenteilen 2 der Flachdichtkupplungen angeordnet, und greift in der Kupplungsstellung der Flachdichtkupplungen, wie in Fig. 7 im einzelnen gezeigt ist, in eine dazu koaxiale Bohrung 40 an dem benachbarten Spannhebel 6 von innen ein. Zum Lösen des Sperrstiftes 39 aus dieser Verriegelungsstellung ist an der Außenseite des Spannhebels 6 ein gegen den durch eine Druckfeder 41 belasteten Sperrstift 39 verschiebbarer Druckknopf 42 angeordnet.

Die Funktionsweise der Schnellkupplung mit den an den beiden Tragplatten 4, 5 starr befestigten Kupplungsteilen der Flachdichtkupplungen 1 ist in Fig. 8 bis 10 im einzelnen gezeigt. Beim Herstellen der Kupplungsverbindung setzen zuerst die durch einen federbelasteten Ventilkörper 43 geschlossenen Steckerteile 3 der Flachdichtkupplungen 1 auf die ebenfalls noch geschlossenen Muffenteile 2 an der unteren Tragplatte 4 auf. Durch weiteres Niederdrücken der oberen Tragplatte 5 mit den daran befestigten Steckerteilen 3 der Fiachdichtkupplungen 1 mittels der beiden Spannhebel 6, 7 dringt das rohrförmige Ventilgehäuse 44 des Steckerteils 3 in das ebenfalls rohrförmige Ventilgehäuse 45 des Muffenteils 2 teleskopartig ein und drückt zunächst eine federbelastete Zwischenhülse 46 so weit nach unten, bis diese eine den starren Ventilkörper 47 des Muffenteils 2 umgebende Innenhülse 48 gegen den Druck einer abstützenden Feder 49 mitnimmt, wobei durch weiteres Niederdrücken des Steckerteils 2 einerseits der Ventilkörper 43 des Steckerteils 3 von seinem Ventilsitz abgehoben wird und anschließend die den Ventilkörper 47 des Muffenteils 2 umgebende Innenhülse 48 den Durchlaß von dem Muffenteil 2 zum Steckertei 31 der betreffenden Flachdichtkupplungen 1 freigibt, ohne daß Leckverluste eintreten.

Wie in Fig. 8 bis Fig. 10 zu erkennen ist, weist bei den Flachdichtkupplungen 1 das Muffenteil 2 und das zugehörige Steckerteil 3 je einen Ventilsitz und je einen Ventilkörper auf, deren Schließlage derart federbelastet ist, daß bei jeder Ventilanordnung eine stirnseitige Ventilkörper-Kreisfläche und eine diese umgebende ventilsitzseitige Ringfläche übergangslos in einer gemeinsamen Verschlußebene liegen, so daß der Ventilkörper und die Ventilsitze von Muffen- und Steckerteil 2, 3 bei dem den Flüssigkeitsdurchtritt freigebenden Kupplungsvorgang einander wechselseitig zwangsläufig in die Ventil-Öffnungsstellung hineinbewegen und ebenso eine leckfreie Trennung ermöglichen.

Bei Erreichen der Kupplungsstellung von Fig. 5 und 10 ist die bewegliche Tragplatte 5 mit ihrem hervorspringenden Mittelteil 32 in die Mulde 33 an der feststehenden Tragplatte 4 so weit eingedrungen, daß sie mit ihrem abgesetzten Umfangsrand 31 auf dem oberen Umfangsrand 34 der unteren Tragplatte 4 aufsitzt und beide Tragplatten 4, 5 durch die umlaufende Rundschnurdichtung 36 gegeneinander abgedichtet sind. Die Spannzapfen 11, 12 der Tragplatte 5 fallen in die Rasten 38 an den beiden Spannhebeln 6, 7 ein, wie in Fig. 5 und 6 gezeigt ist, und sichern die Kupplung zusammen mit dem ebenfalls eingerasteten Sperrstift 39 in dieser Stellung.

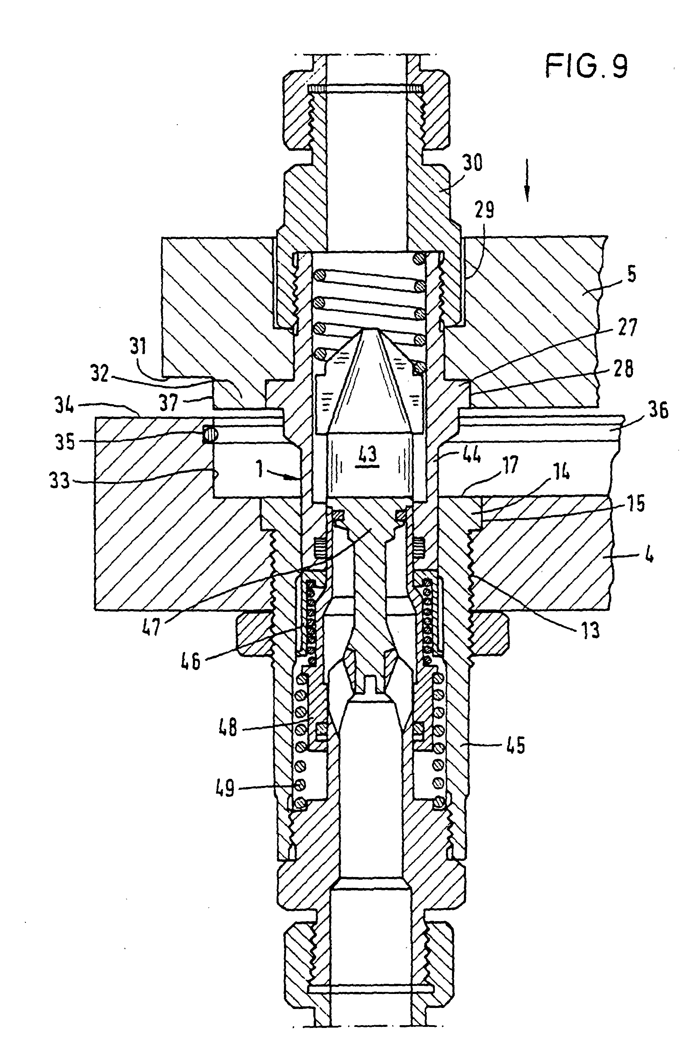

Zum Lösen der Kupplung läuft der Vorgang nach Entriegeln des Sperrstiftes 39 durch Öffnen der Spannhebel 6, 7 in umgekehrter Reihenfolge von der Stellung in Fig. 5 und 10 über die Zwischenstellung von Fig. 9 bis in die Stellung von Fig. 4 und 8 ab, in der die Kupplungsteile der Flachdichtkupplungen 1 wieder verschlossen sind und somit die obere Tragplatte 5 mit den daran befestigten Steckerteilen 3 von den Muffenteilen 2 der vorhandenen Flachdichtkupplungen 1 abgehoben werden kann, und zwar ohne Verlust von Hydraulikflüssigkeit und ohne Eindringen von Luft in den Hydraulikkreislauf.

### Liste der Bezugszeichen

- 1: Flachdichtkupplung
- 2: Muffenteil
- 3: Steckerteil
- 4: Tragplatte
- 5: Tragplatte
- 6: Spannhebel
- 7: Spannhebel
- 8: Drehlagerzapfen
- 9: Drehlagerzapfen
- 10: Eingriffsschlitz
- 11: Spannzapfen
- 12: Spannzapfen
- 13: Gewindeabschnitt
- 14: Umfangsflansch
- 15: Umfangsnut
- 16: Konsole
- 17: Stirnseite
- 18: Kupplungsseite
- 19: Kreisumfana
- 20: Mittelöffnung
- 21: Winkelabschnitt
- 22: Schwenkachse
- 23: Führungsstift
- 24: Führungsstift
- 25: Führungsöffnung
- 26: Führungsöffnung
- 27: Umfangsflansch
- 28: Umfangsnut
- 29: Montageöffnung
- 30: Schraubmuffe
- 31: Umfangsrand
- 32: Mittelteil
- 33: Mulde
- 34: Umfangsrand
- 35: Umfanasnut
- 36: Rundschnurdichtung
- 37: Außenumfang
- 38: Raste
- 39: Sperrstift
- 40: Bohrung
- 41: Druckfeder
- 42: Druckknopf
- 43: Ventilkörper
- 44: Ventilgehäuse
- 45: Ventilgehäuse
- 46: Zwischenhülse
- 47: Ventilkörper
- 48: Innenhülse
- 49: Feder

## Patentansprüche

1. Schnellkupplung zum jeweils gleichzeitigen Herstellen oder Lösen der Verbindungen mehrerer Kupplungen und/oder Anschlußstecker mit ineinandergreifenden Muffen- und Steckerteilen von Hydraulik-, Pneumatik- und/oder elektrischen Energieübertragungseinrichtungen als Kupplungsblock für hydraulisch betriebene Anbaugeräte an Fahrzeugen,
wobei die Muffenteile (2) und die Steckerteile (3) an zwei Tragplatten (4, 5) sitzen, die durch miteinander verbundene Spannhebel (6, 7), die die Tragplatten (4, 5) an deren Rändern von außen her übergreifen, gegeneinander bewegbar und in der Kupplungsstellung aneinander festlegbar sind,
wobei die Steckerteile (3) an der einen Tragplatte (5) starr befestigt sind und von dieser hervorstehen und die andere Tragplatte (4) mit den Muffenteilen (2) an einem Fahrzeug fest montierbar ist,
und wobei die Spannhebel (6, 7) um koaxiale Drehlagerzapfen (8, 9) an einer der beiden Tragplatten (4, 5) schwenkbar sind und kurvenförmige Eingriffsschlitze (10) aufweisen, mit denen sie von gegenüberliegenden Rändern an der anderen Tragplatte koaxial zueinander und parallel zu den Drehlagerzapfen (8, 9) hervorstehende Spannzapfen (11, 12) übergreifen,
**dadurch gekennzeichnet,**
**daß** die Hydraulikkupplungen federbelastete selbstdichtende Flachdichtkupplungen (1) sind,
deren Muffen- und Steckerteile (2, 3) ohne Sperrkugelverriegelungen ineinandergreifen,
wobei das Muffenteil (2) einen verschiebbaren Ventilsitz und einen starren Ventilkörper (47) und das zugehörige Steckerteil (3) einen starren Ventilsitz und einen verschiebbaren Ventilkörper (43) aufweisen,
wobei die Schließlage der verschiebbaren Ventilteile (43, 46, 48) derart federbelastet und durch Anschläge bestimmt ist, daß bei jeder Ventilanordnung eine stirnseitige Ventilkörper-Kreisfläche und eine diese umgebende ventilsitzseitige Ringfläche übergangslos in einer gemeinsamen Verschlußebene liegen,
so daß der Ventilkörper und die Ventilsitze von Muffen- und Steckerteil (2, 3) bei dem den Flüssigkeitsdurchtritt freigebenden Kupplungsvorgang einander wechselseitig zwangsläufig in die Ventil-Öffnungsstellung hineinbewegen und ebenso eine leckfreie Trennung ermöglichen,
**daß** das Muffenteil (2) jeder Flachdichtkupplung mit einem gegenüber einem Gewindeabschnitt (13), mit dem jedes Muffenteil (2) in der Tragplatte (4) verschraubt ist, radial nach außen hervorspringenden Umfangsflansch (14) in einer entsprechenden Umfangsnut (15) an einer Montageöffnung für das Muffenteil (2) an der fest montierbaren Tragplatte (4) derart versenkt befestigt ist, daß es mit seiner flachen Stirnseite (17) in einer gemeinsamen Ebene mit der Kupplungsseite (18) der Tragplatte (4) abschließt
und **daß** die Steckerteile (3) der Flachdichtkupplungen von der beweglichen Tragplatte (5) so weit hervorstehen, daß die beiden Tragplatten (4, 5) in der Kupplungsstellung der Flachdichtkupplungen dicht aneinanderliegen.

2. Schnellkupplung nach Anspruch 1, **dadurch gekennzeichnet, daß** die Spannhebel (6, 7) mit ihren Drehlagerzapfen (8, 9) an der fest montierten Tragplatte (4) dicht unterhalb der Kupplungsseite (18) der Tragplatte (4) angelenkt sind.

3. Schnellkupplung nach Anspruch 1 oder 2, **dadurch gekennzeichnet, daß** die beiden Tragplatten (4, 5) kreisförmig ausgebildet sind, daß die untere fest montierte Tragplatte (4) einen geringfügig größeren Durchmesser als die bewegliche obere Tragplatte (5) hat und an ihrem Kreisumfang (19) im Bereich der an ihr angelenkten beiden Spannhebel (6, 7) derart seitlich abgeflacht ist, daß die Spannhebel (6, 7) die von der beweglichen Tragplatte (5) seitlich hervorstehenden Spannzapfen (11, 12) in ihren kurvenförmigen Eingriffsschlitzen (10) innerhalb des Kreisumfanges (19) der festen Tragplatte (4) aufnehmen.

4. Schnellkupplung nach einem der Ansprüche 1 bis 3, **dadurch gekennzeichnet, daß** an beiden Tragplatten (4, 5) die Muffen- und Steckerteile (2, 3) der Flachdichtkupplungen rings um eine Mittelöffnung (20) für eine weitere Flachdichtkupplung oder eine elektrische oder pneumatische Steckverbindung in einem gleichen gegenseitigen Winkelabstand (21) von jeweils 90° und jeweils paarweise beidersetis der Schwenkachse (22) der Spannhebel (6, 7) und der dazu achsparallelen Spannzapfen (11, 12) derart verteilt angeordnet sind, daß beim Kuppeln und Entkuppeln stets alle federbelasteten Flachdichtkupplungen gleichmäßig zusammengedrückt und wieder entlastet werden.

5. Schnellkupplung nach einem der Ansprüche 1 bis 4, **dadurch gekennzeichnet, daß** von der Tragplatte (4) mit den Muffenteilen (2) der Flachdichtkupplungen mindestens zwei Führungsstifte (23, 24) koaxial zu den Längsachsen der Flachdichtkupplungen und beiderseits der Schwenkachse (22) der Spannhebel (6, 7) mittig zwischen diesen parallel zueinander aufragen, die in dazu passende Führungsöffnungen (25, 26) an der anderen Tragplatte (5) mit den Steckerteilen (3) der Flachdichtkupplungen mit Gleitspiel eingreifen.

6. Schnellkupplung nach einem der Ansprüche 1 bis 5, **dadurch gekennzeichnet, daß** die Steckerteile (3) der Flachdichtkupplungen mit einem nach außen hervorspringenden Umfangsflansch (27) in eine entsprechende Umfangsnut (28) an der Montageöffnung (29) an der zugehörigen Tragplatte (5) eingreifen und in dieser mittels einer Schraubmuffe (30) festgelegt sind, die von der Rückseite der Tragplatte (5) auf das Anschlußende des Steckerteils (3) aufgeschraubt ist.

7. Schnellkupplung nach einem der Ansprüche 1 bis 6, **dadurch gekennzeichnet, daß** die Tragplatten (4, 5) mit einer randseitigen Dichtung rings um die ineinandergreifenden Muffen- und Steckerteile (2, 3) der Flachdichtkupplungen ausgebildet sind.

8. Schnellkupplung nach einem der Ansprüche 1 bis 7, **dadurch gekennzeichnet, daß** an einer Tragplatte (4) eine Rundschnurdichtung (36) angeordnet ist, die bei miteinander verbundenen Tragplatten (4, 5) an der gegenüberliegenden Tragplatte (5) abdichtend anliegt.

9. Schnellkupplung nach einem der Ansprüche 1 bis 8, **dadurch gekennzeichnet, daß** die bewegliche Tragplatte (5) mit einem hervorstehenden, von einem stufenförmig zurückspringenden Umfangsrand (31) umgebenen flachen Mittelteil (32) in eine entsprechende flache Mulde (33) mit einem hervorstehenden Umfangsrand (34) an der festen Tragplatte (4) abdichtend eingreift.

10. Schnellkupplung nach einem der Ansprüche 1 bis 9, **dadurch gekennzeichnet, daß** die Spannhebel (6, 7) für die gegenseitige Festlegung der Tragplatten (4, 5) mit den ineinandergreifenden Flachdichtkupplungen an den Enden der kurvenförmigen Eingriffsschlitze (10) jeweils eine Raste (38) aufweisen, in der die von der beweglichen Tragplatte (5) hervorstehenden Spannzapfen (11, 12) in der Kupplungsstellung durch den Druck der federbelasteten Flachdichtkupplungen gesichert sind.

11. Schnellkupplung nach einem der Ansprüche 1 bis 10, **dadurch gekennzeichnet, daß** mindestens einem der beiden Spannhebel (6, 7) ein zu deren Schwenkachse (22) paralleler federbelasteter Sperrstift (39) zugeordnet ist, der die Spannhebel (6, 7) in der Kupplungsstellung der Flachdichtkupplungen an der zugehörigen Tragplatte (4) festlegt.

12. Schnellkupplung nach Anspruch 11, **dadurch gekennzeichnet, daß** der Sperrstift (39) an der Tragplatte (4) mit den Muffenteilen (2) der Flachdichtkupplungen angeordnet ist und in der Kupplungsstellung der Flachdichtkupplungen in eine dazu koaxiale Bohrung (40) an dem zugehörigen Spannhebel (6) von innen eingreift, und daß an der Außenseite des betreffenden Spannhebels (6) ein gegen den Sperrstift (39) verschiebbarer Druckknopf (42) zum Lösen des Sperrstiftes aus der Verriegelungsstellung angeordnet ist.

## Claims

1. Quick coupling for simultaneously establishing or releasing the connections of a plurality of couplings and/or connectors having mating female and male parts of hydraulic, pneumatic and/or electric power transmission devices as a coupling box for hydraulically operated implements mounted on vehicles, wherein the female parts (2) and the male parts (3) are seated on two supporting plates (4, 5), which are movable towards one another by means of clamping levers (6, 7), which are connected to one another and engage externally over the edges of the supporting plates (4, 5), and in the coupled position are lockable against one another, wherein the male parts (3) are rigidly fastened to and project from the one supporting plate (5) and the other supporting plate (4) with the female parts (2) is mountable in a fixed manner on a vehicle, and wherein the clamping levers (6, 7) are capable of swivelling about coaxial pivot bearing journals (8, 9) on one of the two supporting plates (4, 5) and comprise curved engagement slots (10), with which they engage over clamping pins (11, 12), which project from opposite edges of the other supporting plate coaxially to one another and parallel to the pivot bearing journals (8, 9),
**characterized in**
**that** the hydraulic couplings are spring-loaded, self-sealing flat sealing couplings (1),
whose female and male parts (2, 3) mate without locking ball interlocks,
wherein the female part (2) comprises a displaceable valve seat and a rigid valve body (47) and the associated male part (3) comprises a rigid valve seat and a displaceable valve body (43),
wherein the closed position of the displaceable valve parts (43, 46, 48) is spring-loaded and determined by stops in such a manner that, in each valve arrangement, a circular surface at the end face of the valve body and an annular valve seat surface surrounding said circular surface lie in a transition-free manner in a common closure plane,
so that the valve body and the valve seats of the female and male part (2, 3), during the coupling process enabling the passage of fluid, move in alternate directions to one another positively into the valve opening position and likewise enable a leakage-free disconnection,
that the female part (2) of each flat sealing coupling is fastened by a peripheral flange (14), which projects radially outwards relative to a threaded portion (13) with which each female part (2) is screwed in the supporting plate (4), in a corresponding peripheral groove (15) in an assembly opening for the female part (2) in the fixedly mountable supporting plate (4) in such a recessed manner that it terminates with its flat end face (17) in a common plane with the coupling side (18) of the supporting plate (4)
and that the male parts (3) of the flat sealing couplings are project to such an extent from the movable supporting plate (5) that the two supporting plates (4, 5) lie sealingly against one another in the coupled position of the flat sealing couplings.

2. Quick coupling according to claim 1, **characterized in that** the clamping levers (6, 7) are coupled by their pivot bearing journals (8, 9) to the fixed supporting plate (4) just below the coupling side (18) of the supporting plate (4).

3. Quick coupling according to claim 1 or 2, **characterized in that** the two supporting plates (4, 5) are circular, that the bottom fixed supporting plate (4) has a slightly greater diameter than the movable upper supporting plate (5) and at its circle periphery (19), in the region of the two clamping levers (6, 7) coupled thereto, is laterally flattened in such a manner that the clamping levers (6, 7) receive the clamping pins (11, 12), which project laterally from the movable supporting plate (5), in their curved engagement slots (10) inside the circle periphery (19) of the fixed supporting plate (4).

4. Quick coupling according to one of claims 1 to 3, **characterized in that** the male and female parts (2, 3) of the flat sealing couplings are disposed on both supporting plates (4, 5) so as to be distributed at an identical angular distance (21) from one another of 90° around a central opening (20) for a further flat sealing coupling or an electric or pneumatic plug-in connection and arranged in each case in pairs on either side of the swivelling axis (22) of the clamping levers (6, 7) and the clamping pins (11, 12) paraxial thereto, such that during coupling and uncoupling all of the spring-loaded flat sealing couplings are always uniformly pressed together and released again.

5. Quick coupling according to one of claims 1 to 4, **characterized in that** projecting up from the supporting plate (4) having the female parts (2) of the flat sealing couplings are at least two guide pins (23, 24) extending parallel to one another and coaxially relative to the longitudinal axes of the flat sealing couplings and on either side of the swivelling axis (22) of the clamping levers (6, 7) centrally between the latter, which guide pins engage with sliding clearance into matching guide openings (25, 26) in the other supporting plate (5) having the male parts (3) of the flat sealing couplings.

6. Quick coupling according to one of claims 1 to 5, **characterized in that** the male parts (3) of the flat sealing couplings engage with an outwardly projecting peripheral flange (27) into a corresponding peripheral groove (28) in the assembly opening (29) of the associated supporting plate (5) and are locked therein by means of a screwed fitting (30), which is screwed from the rear of the supporting plate (5) onto the connection end of the male part (3).

7. Quick coupling according to one of claims 1 to 6, **characterized in that** the supporting plates (4, 5) are constructed at their edges with a seal extending around the mating female and male parts (2, 3) of the flat sealing couplings.

8. Quick coupling according to one of claims 1 to 7, **characterized in that** there is disposed on one supporting plate (4) an annular cord packing (36) which, when the supporting plates (4, 5) are connected to one another, lies sealingly against the opposing supporting plate (5).

9. Quick coupling according to one of claims 1 to 8, **characterized in that** the movable supporting plate (5) sealingly engages with a projecting, flat middle part (32), which is surrounded by a step-like recessed peripheral edge (31), into a corresponding flat trough (33) with a projecting peripheral edge (34) in the fixed supporting plate (4).

10. Quick coupling according to one of claims 1 to 9, **characterized in that**, for mutual locking of the supporting plates (4, 5) having the mating flat sealing couplings, the clamping levers (6, 7) each have at the end of the curved engagement slots (10) a notch (38) in which the clamping pins (11, 12) projecting from the movable supporting plate (5) are locked in the coupled position by the pressure of the spring-loaded flat sealing couplings.

11. Quick coupling according to one of claims 1 to 10, **characterized in that** there is associated with at least one of the two clamping levers (6, 7) a spring-loaded locking pin (39), which extends parallel to the swivelling axis (22) of the clamping levers and locks the clamping levers (6, 7) in the coupled position of the flat sealing couplings against the associated supporting plate (4).

12. Quick coupling according to claim 11, **characterized in that** the locking pin (39) is disposed on the supporting plate (4) having the female parts (2) of the flat sealing couplings and, in the coupled position of the flat sealing couplings, engages from the inside into a coaxial bore (40) in the associated clamping lever (6), and that disposed on the outside of the relevant clamping lever (6) is a push-button (42) which is displaceable towards the locking pin (39) for releasing the locking pin from the interlock position.

## Revendications

1. Raccord rapide pour établir ou couper chaque fois simultanément les liaisons de plusieurs raccords et/ou prises de raccordement avec des parties douille et fiche s'engageant les unes dans les autres venant de dispositifs de transmission d'énergie hydraulique, pneumatique et/ou électrique, comme blocs de couplage pour des appareils fonctionnant hydrauliquement sur des véhicules, les parties de douille (2) et les parties de fiche (3) siégeant sur deux plaques support qui sont déplaçables l'une par rapport à l'autre au moyen de leviers de serrage (6, 7) reliés ensemble et saisissant par le dessus et par l'extérieur sur leur bord les plaques support (4, 5) et qui peuvent être fixées l'une à l'autre en position d'accouplement, les parties prise (3) étant fixées rigidement sur une plaque support (5) et faisant saillie de celle-ci et l'autre plaque support (4) étant susceptible d'être montée à demeure avec les parties douille (2) sur un véhicule, et les leviers de serrage (6, 7) étant susceptibles de pivoter autour de tourillons de palier de rotation (8, 9) coaxiaux disposés sur l'une des deux plaques support (4, 5) et présentant des fentes d'engagement (10) en forme de courbes à l'aide desquelles elles saisissent des tourillons de serrage (11, 12) faisant saillie de bords opposés coaxialement sur l'autre plaque support et parallèlement aux tourillons de palier de rotation (8, 9), **caractérisé par le fait que** les raccords hydrauliques sont des raccords à étanchéité à plat (1), auto-étanches sollicités par ressort dont les parties douille et prise (2, 3) s'engagent l'une dans l'autre sans verrouillager à bille de blocage, la partie douille (2) présentant un siège de soupape déplaçable et un opercule fixe (47) et la partie fiche (3) afférente présentant un siège de soupape fixe et un opercule déplaçable (43), tandis que la position de fermeture des parties de soupape déplaçables (43, 46, 48) est sollicitée par un ressort et déterminée par des butées de manière que, pour chaque dispositif à soupape, une face circulaire d'opercule, frontale, et une face annulaire, située côté siège de soupape et entourant cette face circulaire, soit située sans transition dans un plan de fermeture commun, de manière que l'opercule et les sièges de soupape de la partie douille et de la partie fiche (2, 3), lors du processus d'accouplement libérant le passage du liquide, se déplacentl'un à l'intérieur de l'autre réciproquement obligatoirement dans la position d'ouverture de soupape et permettent également une séparation sans production de fuite, en ce que la partie douille (2) de chaque couplage à étanchéité à plat est fixée à une bride périphérique (14) faisant saillie radialement vers l'extérieur, placée en face d'un tronçon fileté (13) à l'aide duquel chaque partie douille (2) est vissée dans la plaque support (4), dans une gorge périphérique (15) correspondante aménagée sur une ouverture de montage destinée à la partie douille (2) sur la plaque support (4) pouvant être montée rigidement, la fixation étant noyée de manière à ce que, par sa face frontale plate (17), elle délimite un plan commun avec la face d'accouplement (18) de la plaque support (4), et en ce que les parties fiche (3) des raccords à étanchéité à plat font saillie de la plaque support (5) mobile de manière que les deux plaques support (4, 5) appuient de façon étanche l'une sur l'autre lorsque les raccords à étanchéité à plat se trouvent en position d'accouplement.

2. Raccord rapide selon la revendication 1, **caractérisé en ce que** les leviers de serrage (6, 7) sont articulés par leurs tourillons de palier de rotation (8, 9) sur la plaque support (4) montée à demeure, l'articulation se faisant à proximité et au-dessous de la face d'accouplement (18) de la plaque support (4).

3. Raccord rapide selon la revendication 1 ou 2, **caractérisé en ce que** les deux plaques support (4, 5) sont de forme circulaire, **en ce que** la plaque support inférieure (4) montée à demeure a un diamètre légèrement plus grand que celui de la plaque support supérieure (5) mobile et est aplatie latéralement sur sa périphérie circulaire (19) dans la zone des deux leviers de serrage (6, 7) articulés sur elle, l'aplatissement étant tel que les leviers de serrage (6, 7) reçoivent les tourillons de serrage (11, 12), faisant saillie latéralement de la plaque support (5) mobile, dans leur fente d'engagement (10) à forme courbe, à l'intérieur de la périphérie circulaire (19) de la plaque support fixe (4).

4. Raccord rapide selon l'une des revendications 1 à 3, **caractérisé en ce que** sur les deux plaques support (4, 5), les parties douille et fiche (2, 3) des accouplements à étanchéité à plat sont disposés tout autour d'une ouverture centrale (20) destinée à un autre raccord à étanchéité à plat ou bien un raccord à enfichage électrique ou pneumatique, selon un espacement angulaire (21) mutuel identique, de chaque fois 90° et chaque fois par paires, de part et d'autre de l'axe de pivotement (22) des leviers de serrage (6, 7) et des tourillons de serrage (11, 12) parallèles à leur axe, la répartition étant telle que, lors de l'accouplement et du désaccouplement, tous les raccords à étanchéité à plat sollicités par un ressort soient continument comprimés et de nouveau déchargés régulièrement.

5. Raccord rapide selon l'une des revendications 1 à 4, **caractérisé en ce qu'**au moins deux tiges de guidage (23, 24) font saillie de la plaque support (4) portant les parties douille (2) des raccords à étanchéité à plat, coaxialement par rapport aux axes longitudinaux des raccords à étanchéité à plat et de part et d'autre de l'axe de pivotement (22) des leviers de serrage (6, 7), à mi-distance entre ceux-ci et parallèlement l'un à l'autre, en s'engageant dans des ouvertures de guidage (25, 26) ajustées pour elles et ménagées sur l'autre plaque support (5) portant les parties fiche (3) des raccords à étanchéité à plat, l'engagement se faisant avec un jeu de glissement.

6. Raccord rapide selon l'une des revendications 1 à 5, **caractérisé en ce que** les parties fiche (3) des raccords à étanchéité à plat s'engagent par une bride périphérique (27) faisant saillie vers l'extérieur dans une gorge périphérique (28) correspondante ménagée sur l'ouverture de montage (29), sur la plaque support (5) afférente et sont fixées dans celle-ci au moyen d'une douille à vissage (30), qui est vissée depuis la face arrière de la plaque support (5) sur l'extrémité de raccordement de la partie fiche (3).

7. Raccord rapide selon l'une des revendications 1 à 6, **caractérisé en ce que** les plaques support (4, 5) sont réalisées avec un joint d'étanchéité situé côté bordure, tout autour des parties douille et fiche (2, 3), s'engageant l'une dans l'autre, des raccords à étanchéité à plat.

8. Raccord rapide selon l'une des revendications 1 à 7, **caractérisé en ce que**, sur une plaque support (4), est disposé un joint d'étanchéité torique (36), appuyant avec effet d'étanchéité sur la plaque support (5) placée en regard, lorsque les plaques support (4, 5) sont reliées ensemble.

9. Raccord rapide selon l'une des revendications 1 à 8, **caractérisé en ce que** la plaque support (5) mobile s'engage avec effet d'étanchéité par une partie centrale (32) plate, faisant saillie, entourée par une bordure périphérique (31) en retrait et à forme étagée, dans une auge (33) plate correspondante avec une bordure périphérique (34) en saillie, sur la plaque support fixe (4).

10. Raccord rapide selon l'une des revendications 1 à 9, **caractérisé en ce que** les leviers de serrage (6, 7) destinés à la fixation mutuelle des plaques support (4, 5) avec les raccords à étanchéité à plat s'engageant les uns dans les autres présentent, à chacune des extrémités des fentes d'engagement (10) à forme courbe, un élément d'encliquetage (38) dans lequel les tourillons de serrage (11, 12) sortant de la plaque support (5) mobile sont assurés dans la position d'accouplement, par la pression des raccords à étanchéité à plat sollicités par un ressort.

11. Raccord rapide selon l'une des revendications 1 à 10, **caractérisé en ce qu'**à au moins l'un des deux leviers de serrage (6, 7) est associée une tige de blocage (39) soumise à l'effet d'un ressort, parallèle à son axe de pivotement (22), qui fixe le levier de serrage (6, 7) dans la position d'accouplement des raccords à étanchéité à plat, sur la plaque support (4) afférente.

12. Raccord rapide selon la revendication 11, **caractérisé en ce que** la tige de blocage (39) est disposée sur la plaque support (4) avec les parties douille (2) des raccords à étanchéité à plat et, dans la position d'accouplement des raccords à étanchéité à plat, s'engage depuis l'intérieur dans un perçage (40) qui leur est coaxial ménagé sur les leviers de serrage (6) afférents, **en ce qu'**en face extérieure du levier de serrage (6) concerné est disposé un bouton poussoir (42) déplaçable contre la tige de blocage (39), en vue de désolidariser la tige de blocage en la faisant quitter la position de verrouillage.
